# EUROPEAN PATENT SPECIFICATION

(11) **EP 0 575 082 B1**
(45) Date of publication and mention of the grant of the patent: **26.08.1998**
(21) Application number: 93304400.0
(22) Date of filing: 07.06.1993
(51) Int. Cl.: B23K 9/10

(54) **Apparatus and method for controlling the power supply unit and/or auxiliary units of a welding machine with the help of radio-frequency signals**
Mechanismus und Verfahren zum Steuern der Energieversorgungseinheit und/oder Hilfseinheiten einer Schweissmaschine mit Hochfrequenzsignalen
Appareil et méthode pour commander l'unité d'alimentation en énergie et/ou des unités auxiliaires d'une machine à souder à l'aide de radiofréquence

(30) Priority: 15.06.1992 FI 922757
(43) Date of publication of application: 22.12.1993
(73) Proprietor: KEMPPI OY, SF-15810 Lahti 81 (FI)
(72) Inventor: Mäkimaa, Tapani, SF-15800 Lahti (FI)
(74) Representative: Tribe, Thomas Geoffrey

(56) References cited:
- DE-A- 2 904 458
- PATENT ABSTRACTS OF JAPAN vol. 010, no. 204 (M-499)17 July 1986 & JP-A-61 046 373
- PATENT ABSTRACTS OF JAPAN vol. 010, no. 189 (M-494)3 July 1986 & JP-A-61 033 768

## Description

The present invention is related to an apparatus according to the preamble of claim 1 for controlling the power supply unit and/or auxiliary units of a welding machine with the help of radio-frequency signals.

The invention also concerns a method for controlling the power supply unit and/or auxiliary units of a welding machine with the help of radio-frequency signals.

In prior-art technology, electrical signals in the audio-frequency range are employed for transmission of control signals along the welding cables. Such an information transfer is not possible during the welding process.

Radio-frequency signals are also conventionally employed for remote control of welding equipment. Here, the control signal is transmitted wirelessly from the welding site to the welding equipment. A problem of such an apparatus is created by the mutual radio-frequency interference between multiple pieces of equipment. Furthermore, permits must be applied for the use of higher-powered transmitters. The allowable frequency ranges and maximum transmit power levels vary by country and continent. This causes problems for the equipment manufacturing companies, since a remote-control apparatus intended for use in a certain country must be separately designed to fulfill the regulations issued in that country.

DE-0.2904458 discloses a welding apparatus using a control system which is directly connected to and operates through the welding cable. However, since the transformer supplying current saturates at welding currents, this system cannot be used to control the apparatus during the action of welding.

JP60146373 and JP60133786 disclose systems using extra wires for control.

It is an object of the present invention to overcome the drawbacks of the above-described technology and to achieve an entirely novel apparatus and method for controlling a welding machine with the help of radio-frequency signals.

The invention is based on coupling a radio-frequency burst signal onto the welding cable capacitively or inductively.

More specifically, the apparatus according to the invention is characterised by what is stated in the characterizing part of claim 1.

Furthermore, the method according to the invention is characterized by what is stated in the characterizing part of claim 6.

The invention provides significant benefits.

For instance, when a radio-frequency signal is coupled onto a welding cable, the RF signal level can be kept so low that no danger exists from exceeding internationally established limits of RF interference radiation. Nevertheless, the control of the welding machine is possible also during the welding process.

In the following the invention will be examined in greater detail with reference to exemplifying embodiments illustrated in the annexed drawing in which
Figure 1 shows a block diagram of an apparatus according to the invention.
Figure 2 shows in greater detail the receiver block of the apparatus illustrated in Fig. 1.
Figure 3 shows in greater detail the transmitter block of the apparatus illustrated in Fig. 1.
Figure 4 shows in greater detail the transmitter embodiment illustrated in Fig. 3.
Figure 5 shows in greater detail the receiver block illustrated in Fig. 2.
Figure 6 shows a block diagram of an alternative embodiment of the apparatus according to the invention.
Figure 7 shows diagrammatically a capacitive embodiment according to the invention.
Figure 8 shows in greater detail the coupling of the embodiment illustrated in Fig. 7 to the welding cable.
Figure 9 shows a capacitively coupled receiver circuit according to the invention.

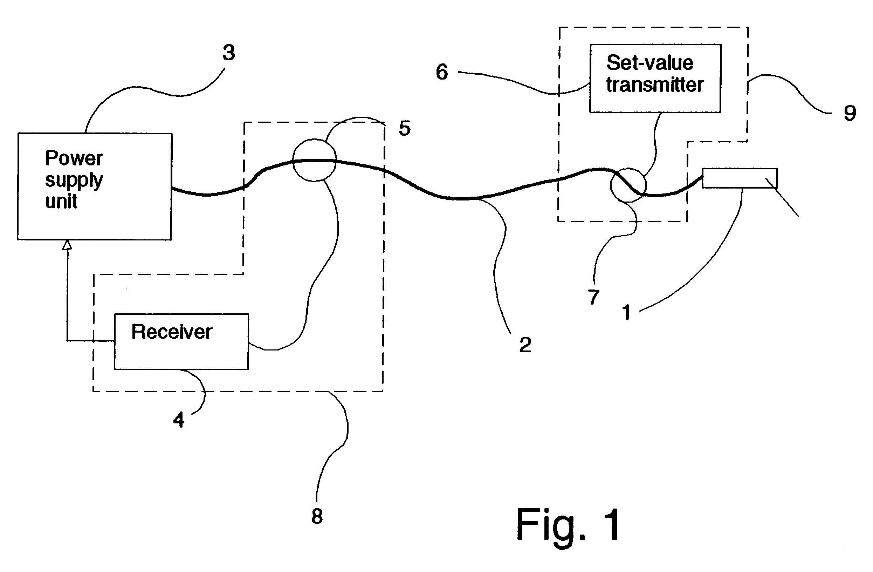

With reference to Fig. 1, the basic equipment of the welding machine comprises a welding torch 1, a power supply unit 3 and a welding cable 2 connecting these elements to each other. According to the invention, the remote control of the power supply unit 3 is implemented by means of a transmitter unit 9 operated at a certain radio frequency and, tuned to the same frequency, a receiver unit 8 which is connected to control the power supply unit 3. A set-value signal transmitter 6 is placed to the vicinity of the welding torch, thus permitting remote control of the welding power supply unit 3 immediately from the welding site. The set-value signal transmitter 6 is galvanically connected to a high-frequency current transformer 7 that performs the coupling of the RF signal onto the welding cable 2. Correspondingly, a high-frequency current transformer 5 galvanically connected to a receiver unit 4 is employed for signal reception and routing via the receiver to the power supply unit 3. As the RF signal is transmitted along the welding cable 2, very low-level transmitter power can be used.

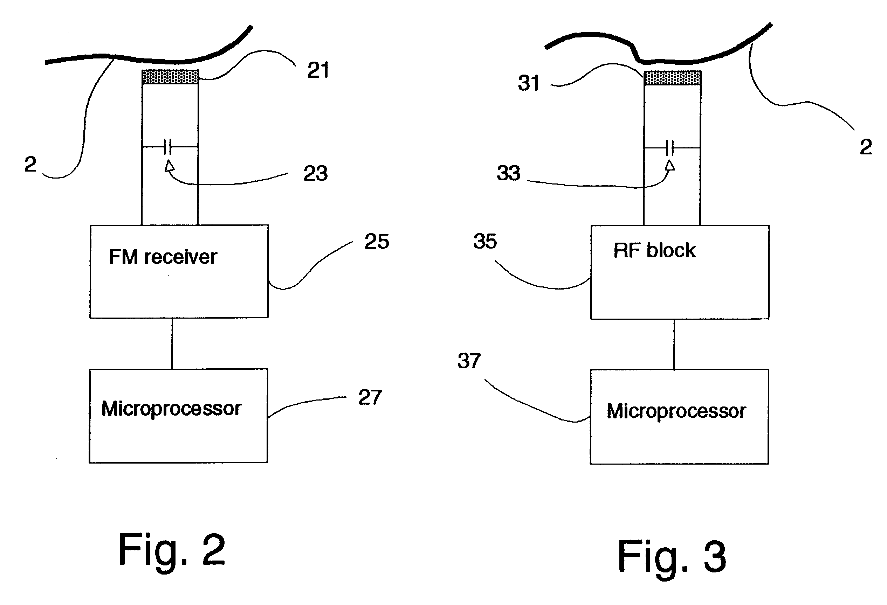

With reference to Fig. 2, the signal is received by means of a coil 21 wound about a core of ferromagnetic material, said coil serving for coupling the signal to an FM receiver block 25. The receiver circuit employed can be any commercially available integrated circuit such as MC 3359. A capacitor 23 connected across the conductors from the coil 21 tunes the LC circuit to the operating frequency of the apparatus. The receiver 25 is further connected to a microprocessor 27 which converts the received signal into a form suited for controlling the power supply unit 3.

With reference to Fig. 3, the transmitter unit comprises a microprocessor 37 performing the control of pulse width, pulse period and other variables for a radio-frequency block 35. From the RF block the signal is transmitted along twin conductors to a coil 31 wound about a core of ferromagnetic material, said coil serving for coupling the signal to the welding cable 2. A capacitor 33 connected over the signal transmission line has the same function as the capacitor 23 of Fig. 2.

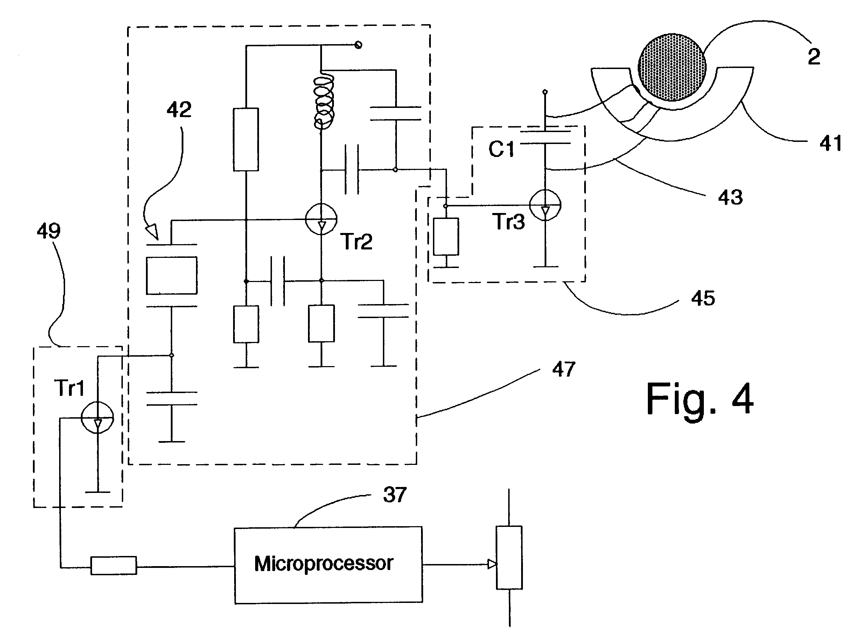

With reference to Fig. 4, the transmitter unit is further dividable into a frequency-shift keying block 49, a crystal oscillator 47 controlled by said FSK block 49 and an amplifier stage 45 driven by said crystal oscillator. From the amplifier stage the signal is transmitted along a transmission line 43 to a coil 41 formed by a ferromagnetic C-core on which the conductor of the transmission line 43 is wound. The C-core ferrite piece performs inductive coupling of the signal onto a welding cable 2. A microprocessor 37 controls a transistor TR1 of the FSK block 49 so as to make the transistor perform the modulation of the frequency of the crystal 42. The crystal oscillator 47 is a conventional oscillator circuit designed about a transistor TR2. An amplifier stage 45 is formed by a transistor TR3 with additional components. The amplifier circuit about the transistor TR3 incorporates a current transformer tuned to the operating frequency of the apparatus with the help of a capacitor Cl. The capacitors 23 and 33 of Figs. 2 and 3, respectively, have the same function as this tuning capacitor C1. Due to the high interference field strengths encountered at a welding site, the minimum operating frequency of the transmitter must be at least a few megahertz. To keep the apparatus technology simple, the operating frequency is preferably below 100 MHz.

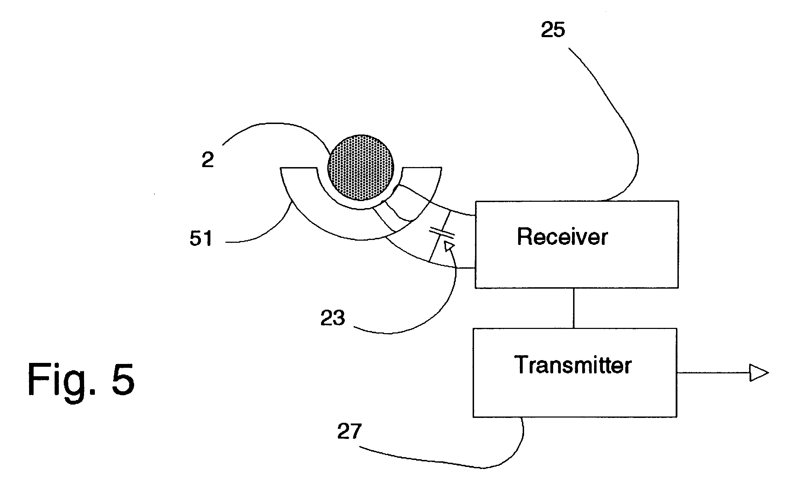

With reference to Fig. 5, the coil 51 shown in Fig. 2 is comprised of a C-core formed by one half of a ferrite ring about which the conductor of the receiver input line is wound. The receiver is tuned to the operating frequency with the help of a capacitor 23 which is resonant with the inductance of the coil 51. Functionally the receiver operates so that the signal from the welding cable is coupled via the coil 51 acting as a current transformer to an integrated receiver circuit 25 which performs the amplification and detection of the signal. Corresponding to the modulation input signal stream of the transmitter 9, the receiver IC 25 delivers a bit stream which is interpreted by the microprocessor 27 of the receiver unit as follows:
1. Syncronization to a start character
2. Address detection and decoding
3. For valid address, reception of data
4. Detection of stop character and processing of received data into a for suitable format the control of the power supply unit.

Exemplifying numerical values for a practical signal could be as follows:

Each message is comprised of an equipment-specific address and the actual control information, complemented with start and stop characters. The length of the message is 3 ms. The interval between the messages is typically approx. 200 ms. The pause interval between the messages can be equipment-specifically randomized, whereby any unintentional synchronization between two message streams is avoided. The transmitter center frequency can be 40 MHz, for instance.

The above-described embodiment makes it possible to construct a wireless remote control suited for use both during and off welding.

As an alternative to a C-core formed by a half ferrite ring, other current transformer constructs are feasible such as a split-core structure conventionally employed in clamp-type current meters, with particular advantage at the transmitter end where the welding equipment must be frequently moved from place to place.

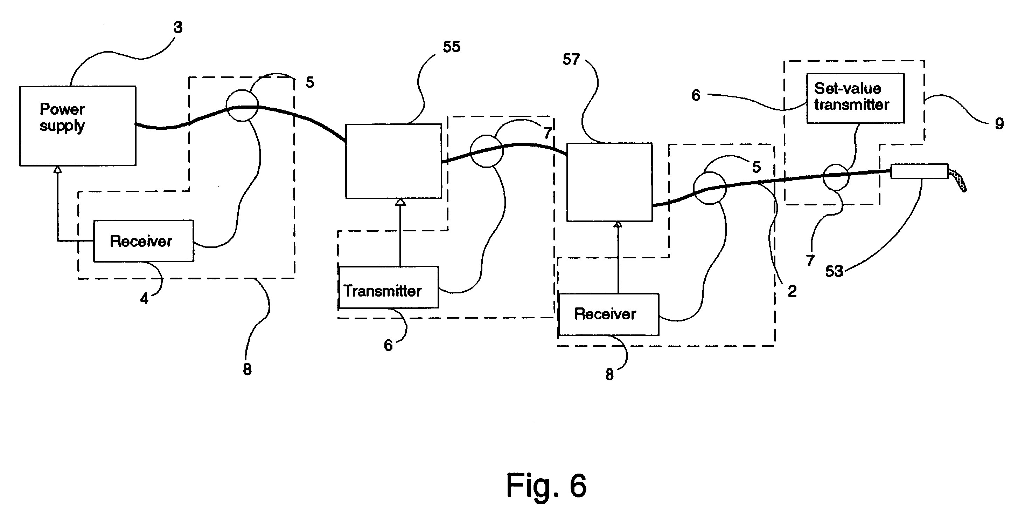

With reference to Fig. 6, the system according to the invention can be complemented in conjunction with MIG and TIG welding equipment to further incorporate auxiliary units 55 and 57, of which the auxiliary unit 57 receives control messages from a set-value transmitter 6 via a receiver 8. Correspondingly, the auxiliary unit 55 transfers the messages to a power supply unit 3. Transmission of messages takes place in the same manner as described above. A welding torch 53 replaces here the welding rod holder 1 shown in Fig. 1.

In MIG welding the auxiliary unit 55 can be a wire feed unit, whereby the auxiliary unit 57 is an intermediate feed unit. The intermediate feed unit 57 is not necessary in all applications, so it can be understood as optional equipment in the present embodiment.

In TIG welding the auxiliary unit 55 is a TIG welding unit, and the auxiliary unit 57 is unnecessary in a TIG application.

Both TIG and MIG equipment are also available as compact equipment in which some of the auxiliary units are physically integrated with the power supply unit.

Welding equipment sets can typically have the following control schemes:
A) Combination of a power supply unit 3 with an auxiliary unit 55 capable of information transmission and a nonintelligent torch 53, whereby the power supply unit is controlled from the auxiliary unit, and
B) combination of a power supply unit with a torch 1 capable of information transmission.

The above typical alternative combinations are not, however, limiting to the embodiments of the invention. By contrast, the discussed auxiliary units can be configured as transmitting or receiving units as necessary.

In the context of the present invention, both the welding rod holder 1 and the welding torch 53 are broadly called as a welding torch.

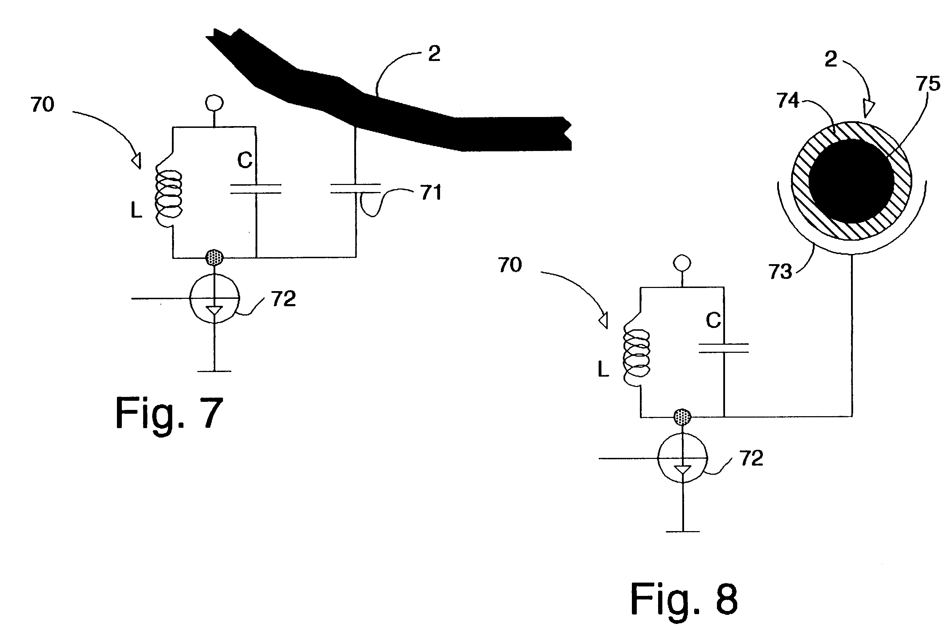

With reference to Fig. 7, the transmitter can also be implemented using capacitive coupling, whereby a capacitor 71 shown in the diagrams performs the coupling of the signal onto the welding cable. The resonant circuit 70 comprised of the coil L and the capacitor C is tuned to the operating frequency of the apparatus. The output signal is provided by a power-stage transistor 72.

With reference to Fig. 8, the coupling capacitor shown in Fig. 7 is configured by making one electrode of the capacitor into the shape of an element 73 which at least partially encloses the welding cable 2, said element advantageously being a portion of a cylinder envelope. The dielectric of the coupling capacitor is provided by the insulating jacket 74 of the welding cable 2 and the other electrode of the capacitor is formed by the conductor 75 of the welding cable 2.

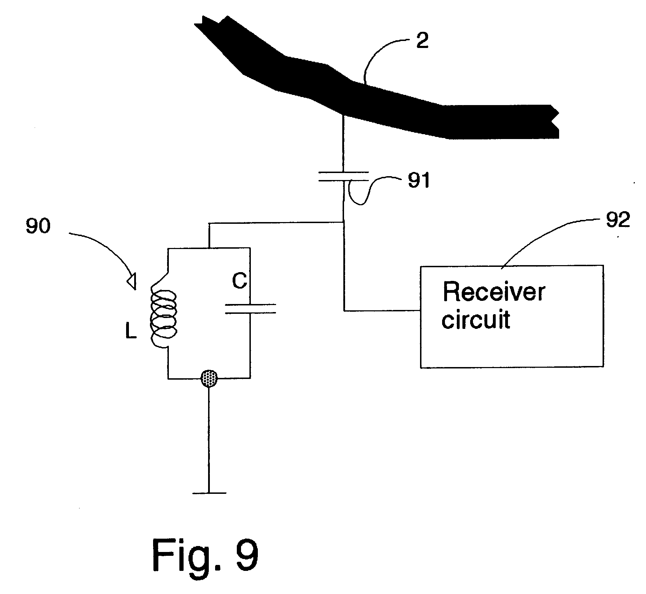

With reference to Fig. 9, the embodiment of the receiver with capacitive coupling is implemented by connecting the receiver circuit 92 between the coupling capacitor 91 and the resonant circuit 90, the resonant circuit 90 being taken to ground potential at its other end. The coupling capacitor 91 is analogous to the capacitor embodiments shown in Figs. 7 and 8. The resonant circuit 90 is tuned to the operating frequency of the apparatus.

The coupling capacitors 71 and 91 are dimensioned so as to avoid detuning of the resonant circuit.

The resonators 70 and 90 can also be replaced by, e.g., ceramic resonators.

The invention is not limiting to the use of inductive transmitter/receiver combinations based on current transformer coupling simultaneously with transmitter/receiver combinations based on capacitive coupling.

In the context of the present invention, reference to radio frequency must understood to deal with frequencies above 20 kHz.

## Claims

1. An apparatus for controlling a power supply unit (3) and/or an auxiliary unit (55, 57) of a welding machine by means of radio-frequency signals, said apparatus comprising
- a welding torch (1, 53),
- a welding cable (2) connected to the welding torch (1),
- a welding power supply unit (3) connected to the other end of said welding cable (2),
- a radio-frequency transmitter (9) situated close to said welding torch (1) and/or said auxiliary unit (55), and
- a radio-frequency receiver (4) connected to said welding power supply unit (3) and/or said auxiliary unit (55, 57),
**characterized** in that
- both the radio-frequency transmitter (9) and receiver (8) are coupled capacitively or inductively onto the welding cable (2) for the purpose of transmitting a radio-frequency control signal over the welding cable (2).

2. An apparatus as defined in claim 1, **characterized** in that said radio-frequency transmitter (9) and receiver (8) are coupled inductively by means of a current transformer (5, 7) onto the welding cable (2).

3. An apparatus as defined in claim 2, **characterized** in that said current transformer (5, 7) is comprised by a C-core formed by one half of a ferrite ring about which the signal-carrying conductor (43) is wound.

4. An apparatus as defined in claim 2, **characterized** in that said current transformer (5, 7) is formed into current clamp having a core of ferro/ferrimagnetic material core about which the signal-carrying conductor is wound.

5. An apparatus as defined in claim 1, **characterized** in that said radio-frequency transmitter (9) and receiver (8) are coupled capacitively by means of a cylindrical electrode element (73) onto the welding cable (2).

6. A method for controlling a power supply unit (3) and/or an auxiliary unit (55, 57) of a welding machine in which method said welding power supply unit (3) and/or an auxiliary unit (55, 57) of the welding machine are remote-controlled from the vicinity of the welding torch (1) by means of radio-frequency signals, **characterized** in that
- the radio-frequency remote-control signal is coupled onto the welding cable (2) capacitively or inductively, and
- the remote-control signal is received capacitively or inductively via a receiver (4) at the power supply unit (3) and/or auxiliary unit (55, 57).

7. A method as defined in claim 6, **characterized** in that a burst signal is imposed onto said welding cable (2).

## Patentansprüche

1. Vorrichtung zur Steuerung einer Stromversorgungseinheit (3) bzw. einer Hilfseinheit (55, 57) einer Schweißmaschine mit Hochfrequenzsignalen, mit folgendem:
- einem Schweißbrenner (1, 53),
- einem mit dem Schweißbrenner (1) verbundenen Schweißkabel (2),
- einer mit dem anderen Ende des besagten Schweißkabels (2) verbundenen Schweißstromversorgungseinheit (3),
- einem in der Nähe des besagten Schweißbrenners (1) bzw. der besagten Hilfseinheit (55) befindlichen Hochfrequenzsender (9), und
- einem mit der besagten Schweißstromversorgungseinheit (3) bzw. Hilfseinheit (55, 57) verbundenen Hochfrequenzempfänger (4),
dadurch gekennzeichnet, daß
- sowohl der Hochfrequenzsender (9) als auch -empfänger (8) zur Übertragung eines Hochfrequenz-Steuersignals über das Schweißkabel (2) kapazitiv oder induktiv an das Schweißkabel (2) angekoppelt sind.

2. Vorrichtung nach Anspruch 1, dadurch gekennzeichnet, daß der besagte Hochfrequenzsender (9) und -empfänger (8) mittels eines Stromwandlers (5, 7) induktiv an das Schweißkabel (2) angekoppelt sind.

3. Vorrichtung nach Anspruch 2, dadurch gekennzeichnet, daß der besagte Stromwandler (5, 7) einen durch eine Hälfte eines Ferritringes gebildeten C-Kern umfaßt, um den der das Signal führende Leiter (43) gewickelt ist.

4. Vorrichtung nach Anspruch 2, dadurch gekennzeichnet, daß der besagte Stromwandler (5, 7) in eine Stromzange mit einem Kern aus ferro-/ferrimagnetischem Material ausgebildet ist, um den der das Signal führende Leiter gewickelt ist.

5. Vorrichtung nach Anspruch 1, dadurch gekennzeichnet, daß der besagte Hochfrequenzsender (9) und -empfänger (8) mittels eines zylindrischen Elektrodenelements (73) kapazitiv an das Schweißkabel (2) angekoppelt sind.

6. Verfahren zum Steuern einer Stromversorgungseinheit (3) bzw. einer Hilfseinheit (55, 57) einer Schweißmaschine, bei dem die besagte Schweißstromversorgungseinheit (3) bzw. eine Hilfseinheit (55, 57) der Schweißmaschine mit Hochfrequenzsignalen aus der Nähe des Schweißbrenners (1) ferngesteuert werden, dadurch gekennzeichnet, daß
- das Hochfrequenz-Fernsteuersignal kapazitiv oder induktiv an das Schweißkabel (2) angekoppelt wird, und
- das Fernsteuersignal kapazitiv oder induktiv über einen Empfänger (4) an der Stromversorgungseinheit (3) bzw. Hilfseinheit (55, 57) empfangen wird.

7. Verfahren nach Anspruch 6, dadurch gekennzeichnet, daß auf das besagte Schweißkabel (2) ein Burstsignal aufgedrückt wird.

## Revendications

1. Appareil pour commander un bloc d'alimentation (3) et/ou un bloc auxiliaire (55, 57) d'une machine à souder au moyen de signaux radioélectriques, ledit appareil comprenant:
- un chalumeau (1, 53),
- un câble (2) de soudage connecté au chalumeau (1),
- un bloc d'alimentation (3) de soudage connecté à l'autre extrémité dudit câble (2) de soudage,
- un émetteur radioélectrique (9) situé à proximité dudit chalumeau (1) et/ou dudit bloc auxiliaire (55), et
- un récepteur radioélectrique (4) connecté audit bloc d'alimentation (3) de soudage et/ou audit bloc auxiliaire (55, 57),
caractérisé en ce que
- l'émetteur (9) et le récepteur (8) radioélectriques sont tous deux couplés au câble (2) de soudage par capacité ou par induction, aux fins de transmettre un signal de commande radioélectrique le long du câble (2) de soudage.

2. Appareil selon la revendication 1, caractérisé en ce que lesdits émetteur (9) et récepteur (8) radioélectriques sont couplés par induction au câble (2) de soudage au moyen d'un transformateur de courant (5, 7).

3. Appareil selon la revendication 2, caractérisé en ce que ledit transformateur de courant (5, 7) est constitué d'un noyau en C formé par une moitié d'un anneau de ferrite autour duquel est enroulé le conducteur (43) porteur des signaux.

4. Appareil selon la revendication 2, caractérisé en ce que ledit transformateur de courant (5, 7) est formé selon un circuit de fixation du niveau du courant possédant un noyau de corps ferro/ferri-magnétique, noyau autour duquel est enroulé le conducteur porteur des signaux.

5. Appareil selon la revendication 1, caractérisé en ce que lesdits émetteur (9) et récepteur (8) radioélectriques sont couplés par capacité au câble (2) de soudage au moyen d'un élément d'électrode cylindrique (73).

6. Méthode pour commander un bloc d'alimentation (3) et/ou un bloc auxiliaire (55, 57) d'une machine à souder, méthode dans laquelle ledit bloc d'alimentation (3) de soudage et/ou un bloc auxiliaire (55, 57) de la machine à souder sont commandés à distance depuis le voisinage du chalumeau (1) au moyen de signaux radioélectriques, caractérisée en ce que
- le signal radioélectrique de commande à distance est couplé au câble (2) de soudage par capacité ou par induction, et
- le signal de commande à distance est reçu par capacité ou par induction par le biais d'un récepteur (4) au niveau du bloc d'alimentation (3) et/ou du bloc auxiliaire (55, 57).

7. Méthode selon la revendication 6, caractérisée en ce qu'un signal en salves est imposé sur ledit câble (2) de soudage.
